(19) Europäisches Patentamt
European Patent Office
Office européen des brevets

(11) **EP 2 132 606 B1**

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **08707647.7**

(22) Anmeldetag: **11.02.2008**

(51) Int Cl.:
*G05B 13/02* (2006.01)    *G05B 13/04* (2006.01)
*G05B 21/02* (2006.01)    *G05B 23/02* (2006.01)

(86) Internationale Anmeldenummer:
**PCT/EP2008/001010**

(87) Internationale Veröffentlichungsnummer:
**WO 2008/101607 (28.08.2008 Gazette 2008/35)**

(54) **VERFAHREN ZUM REGELN EINER POSITION UND ANTRIEB**

METHOD FOR CONTROLLING A POSITION AND DRIVE

PROCÉDÉ POUR RÉGLER UNE POSITION, ET ENTRAÎNEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.02.2007 DE 102007009368**

(43) Veröffentlichungstag der Anmeldung:
**16.12.2009 Patentblatt 2009/51**

(73) Patentinhaber: **SEW-EURODRIVE GmbH & Co. KG 76646 Bruchsal (DE)**

(72) Erfinder: **HAMMEL, Wolfgang 76646 Bruchsal (DE)**

(56) Entgegenhaltungen:
**DE-A1- 19 548 909     JP-A- 9 238 031
US-B1- 6 185 467     US-B1- 6 326 758**

- **CHAOJUN ZHOU ET AL: "Adaptive switching control method and its application to tracking control of a robot" INDUSTRIAL ELECTRONICS, CONTROL, AND INSTRUMENTATION, 1996., PROCEEDIN GS OF THE 1996 IEEE IECON 22ND INTERNATIONAL CONFERENCE ON TAIPEI, TAIWAN 5-10 AUG. 1996, NEW YORK, NY, USA, IEEE, US, Bd. 1, 5. August 1996 (1996-08-05), Seiten 214-219, XP010203407 ISBN: 978-0-7803-2775-7**

**Beschreibung**

Die Erfindung betrifft ein Verfahren zum Regeln einer Position und einen Antrieb.

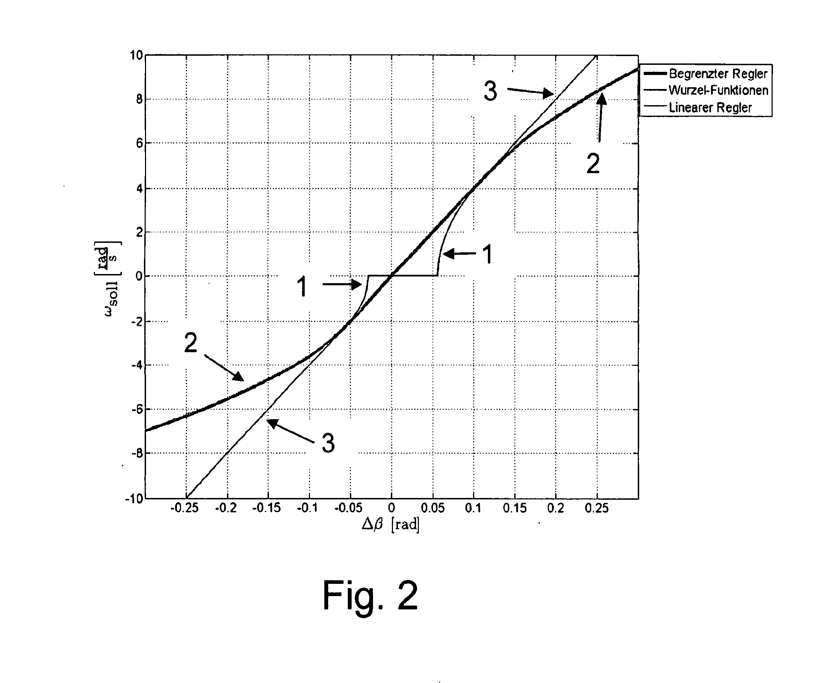

Aus der EP 0 179 356 ist ein Verfahren zur Regelung einer Drehfeldmaschine bekannt. Dabei wird gemäß dortiger Figur 2 der Strom und die Spannung am Motor erfasst. Dabei werden aus einer Reglerstruktur, die einer Modellbildung der Maschine entspricht, Komponenten des Istwerts des Flusses gebildet. Diese werden einem Flussregler zugeführt, dessen Ausgang die Schaltzustände des die Maschine versorgenden Wechselrichters als Stellgrößen beeinflusst.

Aus der DE 1 941 312 ist ein Verfahren zu Steuerung einer Asynchronmaschine bekannt, bei der Hallsensoren 3 verwendet werden.

Aus der DE 195 32 477 A1 ist ein Verfahren zum Anlassen einer Asynchronmaschine bekannt, bei dem zum Anlassen der Drehmomentsollwert Null vorgegeben wird.

Aus der DE 199 752 C1 ist ein Verfahren zum Zuschalten eines Umrichters an einen Asynchronmotor bekannt.

Aus der Veröffentlichung

J. O. Krah, "Bode Plot basierter Servoantrieb Tuning Wizard: Ein Ansatz zwischen manuellem Tuning und Auto-Tuning", SPS / IPC / Drives, Nürnberg, Nov. 2004, pp. 579-587 und der Veröffentlichung
H. Schmirgel, J. O. Krah, R. Berger, "Delay Time Compensation in the Current Control Loop of Servo Drives - Higher Bandwidth at no Trade-off", Power Conversion Intelligent Motion, Nürnberg, June 2006,

ist ein Lageregler mit unterlagertem Drehzahlregelkreis bekannt. Der Lageregler ist dort als P-Lageregler ausgeführt. Des weiteren ist der durch den P-Lageregler erzeugte

Drehzahlsollwert auf einen festen Wert entsprechend der gewünschten bzw. zulässigen Maximaldrehzahl begrenzbar.

Aus der JP 9 238 031 ist ein Verfahren zum Regeln eines Stromes bekannt, bei dem der Stellwert aus der Regelabweichung durch lineare Operationen bestimmt wird, solange die Regelabweichung Innerhalb eines Intervalls liegt, Ansonsten werden nichtlineare Operationen statt der lineraren verwendet.

Aus der US 6 185 467 B1 ist als nlchtlinearer Regler ein sliding-mode-Controller bekannt.

Der Erfindung liegt die Aufgabe zugrunde, einen Lageregler weiterzubilden, wobei die Regelung verbessert sein soll in kostengünstiger Weise.

Erfindungsgemäß wird die Aufgabe bei dem Verfahren nach den in Anspruch 1 und bei dem Antrieb nach den in Anspruch 15 angegebenen Merkmalen gelöst.

Wichtige Merkmale der Erfindung bei dem Verfahren zum Regeln einer Position, insbesondere eines durch einen Antrieb bewegbaren Objektes, sind, dass eine Regelabweichung zwischen Sollposition und Istposition bestimmt wird,
wobei

- der Stellwert aus der Regelabweichung durch lineare Operationen bestimmt wird, solange die Regelabweichung unterhalb eines oberen kritischen Wertes und oberhalb eines unteren kritischen Wertes liegt, und

- der Stellwert aus der Regelabweichung gemäß einer nichtlinearen Funktion bestimmt wird, solange die Regelabweichung oberhalb des oberen kritischen Wertes und unterhalb des unteren kritischen Wertes liegt, wobei der obere kritische Wert derart bestimmt ist, dass beim Regeln ein vorgebbarer maximal zulässiger Beschleunigungswert nicht überschritten wird und der untere kritische Wert derart bestimmt, dass belm Regeln ein vorgebbarer minimal zulässiger Beschleunigungswert nicht unterschritten wird.

Von Vorteil ist dabei, dass Stellgrenzen berücksichtigbar sind und somit Schwingneigung und Ausgleichsvorgänge, wie auch Überschwingen an der Zielposition vermeidbar sind. Hierzu ist keine Berücksichtigung von Zustandsgrößen notwendig sondern es genügt eine bloße Kennlinie. Weiter vorteilig ist, dass die kritischen Werte derart wählbar sind, dass die Stellgrenzen einhaltbar sind, also die Begrenzungen der Stellgröße. Diese treten bei der praktischen Realisierung oft auf, da der zulässige und/oder auftretende Wertebereich der Regelabweichungen oft nicht begrenzt ist oder beliebig groß werden kann. Darüber hinaus sind auch weitere Begrenzungen einhaltbar, wie beispielsweise Begrenzungen der Beschleunigungswerte oder Winkelbeschleunigungswerte. Als konkretes Beispiel ist hierzu die Position ein Winkel, die Stellgröße eine Winkelgeschwindigkeit, also Drehzahl, und die weitere Größe die Winkelbeschleunigung. Letztere ist in der konkreten Anwendung begrenzt, insbesondere durch das maximal zulässige oder erlaubt vorgegebene Drehmoment und das Trägheitsmoment der Anordnung. Somit ist durch die Vorgabe der kritischen Werte die Begrenzung des Drehmoments berücksichtigbar, indem der erfindungsgemäße Regler das Erzeugen solch entsprechend hoher Werte an Beschleunigung vermeidbar macht.

Insbesondere ist bei der Erfindung der obere kritische Wert derart bestimmt, dass beim Regeln ein vorgebbarer maximal zulässlger Beschleunigungswert nicht überschritten wird und der untere kritische Wert derart bestimmt wird, dass beim Regeln ein vorgebbarer minimal zulässiger Beschleunigungswert nicht unterschritten wird. Von Vorteil ist dabei, dass die Begrenzungen der Beschleunigung oder entsprechender Größen schon durch die nichtlineare Kennlinie berücksichtigbar sind. Somit Ist ein Überschwingen verringerbar, Insbesondere die Anzahl der Überschwinger um die Zielposition herum.

Bei einer vorteilhaften Ausgestaltung ordnet die nichtlineare Funktion jeder Regelabweichung umkehrbar eineindeutig einen Wert für die Stellgröße zu. Von Vorteil ist dabei, dass Schwingneigung verminderbar ist und ein kostengünstiger Speicher zum Abspeichern der Kennlinie verwendbar ist. Die Kennlinie ist sogar ohne Speichern der Kennlinienwerte zu jedem Zeitschritt der Regelung bestimmbar, da sie durch eine Funktion darstellbar ist.

Bei einer vorteilhaften Ausgestaltung umfassen die lineare Operationen Multiplizieren der Regelabweichung mit einem Proportionalitätswert, Differenzieren des zeitlichen Verlaufs der Regelabweichung und/oder Integrieren des zeitlichen Verlaufs der Regelabweichung. Von Vorteil ist dabei, dass die Erfindung nicht nur auf P-Regler sondern auch auf andere lineare Regler anwendbar ist. Dabei wird also der lineare Regler wegen der real nur endlichen Wertebereiche seiner Stellgröße derart modifiziert, dass der lineare Regler nur bis zum kritischen Wert an Regelabweichung aktiviert wird und bei Überschreitung beziehungsweise Unterschreitung ein nichtlinearer Regler aktiviert wird. Auf diese Weise sind Überschwingvorgänge vermeidbar oder zumindest reduzierbar.

Bei einer vorteilhaften Ausgestaltung wird der Stellwert aus der Regelabweichung proportional, insbesondere durch Multiplikation mit einem Proportionalitätswert, bestimmt, solange die Regelabweichung unterhalb des oberen kritischen Wertes und oberhalb des unteren kritischen Wertes liegt. Von Vorteil ist dabei, dass die kritischen Werte derart wählbar sind, dass die Stellgrenzen einhaltbar sind. Darüber hinaus sind auch weitere Begrenzungen einhaltbar, wie beispielsweise Begrenzungen der Beschleunigungswerte oder Winkelbeschleunigungswerte.

Bei einer vorteilhaften Ausgestaltung wird

- die zu einem linearen Regler, insbesondere ohne Begrenzung, zugehörige, aus einer Regelabweichung resultierende Einschwingfunktion bestimmt,
- die zu dieser Regelabweichung zugehörige anfängliche Beschleunigung bestimmt,
- daraus ein zur zulässigen maximalen Beschleunigung zugehöriger Wert an Regelabweichung bestimmt,
- dieser Wert als oberer kritischer Wert verwendet.

Insbesondere wird

- die zu einem linearen Regler ohne Begrenzung zugehörige, aus einer Regelabweichung resultierende Einschwingfunktion bestimmt,
- die zur Regelabweichung zugehörige anfängliche Beschleunigung bestimmt,
- daraus ein zur zulässigen minimalen Beschleunigung zugehöriger Wert an Regelabweichung bestimmt,
- dieser Wert als unterer kritischer Wert verwendet.

Von Vorteil ist dabei, dass derjenige Arbeitsbereich des linearen Reglers bestimmbar ist, in welchem ein Überschwingen um die Zielposition herum nicht auftritt und somit in dem weiteren Arbeitsbereich des Reglers geeignete Modifizierungen des Reglers aktivierbar sind, die zumindest ein Reduzieren der Überschwingvorgänge ermöglichen.

Bei einer vorteilhaften Ausgestaltung ist der lineare Regler gekennzeichnet durch den Proportionalitätswert. Von Vorteil ist dabei, dass ein das Regelverhalten bei kleinen Regelabweichungen kennzeichnender Wert für den Regler vorgebbar ist.

Bei einer vorteilhaften Ausgestaltung ist die Position ein Winkel, eine Bahnlänge oder eine Weglänge. Von Vorteil ist dabei, dass die Erfindung nicht nur auf rotatorische Antriebe sondern auch auf Linearantriebe anwendbar ist. Sogar für Kurven-Antriebe ist sie verwendbar.

Entsprechend ist die Stellgröße eine Geschwindigkeit, Bahngeschwindigkeit oder Winkelgeschwindigkeit. Von Vorteil ist dabei, dass die Begrenzungen dieser Größen und deren Ableitungen berücksichtigbar sind.

Bei einer vorteilhaften Ausgestaltung gehört die Einschwingfunktion zur allgemeinen Lösung der dem Regler zugeordneten Differentialgleichung oder Integro-Differentialgleichung. Von Vorteil ist dabei, dass ein linearer Regler durch eine solche Gleichung charakterisierbar ist und die allgemeine Lösung dieser Gleichung verwendbar ist, um die kritischen Werte zu bestimmen, also die Begrenzung nicht nur für die Stellgrößen sondern auch für weitere Größen, wie beispielsweise zeitliche Ableitungen der Stellgrößen, zu berücksichtigen. Insbesondere wird bei der Erfindung aus der allgemeinen Lösung der kritische Wert an Regelabweichung bestimmt, bis zu dem der lineare Regler keine Begrenzung erreicht, insbesondere weder für seine Stellgröße noch deren Ableitungen oder weitere vorgebbare Größen.

Bei einer vorteilhaften Ausgestaltung ist die nichtlineare Funktion eine Wurzelfunktion, insbesondere wobei der Radikant eine lineare Funktion der Regelabweichung ist. Von Vorteil ist dabei, dass die zeitliche Ableitung der Stellgröße, beispielsweise also Beschleunigung, konstant wählbar ist, insbesondere als maximal zulässiger Wert. Somit ist der Regelabweichung ein Stellgrößenwert zuordenbar, der von diesem konstanten Wert ebenfalls abhängt. Somit ist mittels einer Kennlinie, also der nichtlinearen Funktion, jeder Regelabweichung ein Stellgrößenwert derart zuordenbar, dass der maximal zulässige Wert an Beschleunigung nicht überschritten wird.

Bei einer vorteilhaften Ausgestaltung ist der obere und der untere kritische Wert umgekehrt proportional zum Quadrat des Proportionalitätswertes, insbesondere des linearen Reglers. Insbesondere ist der obere kritische Wert proportional zum maximal zulässigen Beschleunigungswert und
der untere kritische Wert ist proportional zum minimal zulässigen Beschleunigungswert. Von Vorteil ist dabei, dass der kritische Wert unabhängig von Zustandsgrößen bestimmbar ist. Denn der jeweilige Beschleunigungswert und der Proportionalitätswert sind vorgebbare, auf die jeweilige Anwendung angepasste Größen. Diese werden spätestens bei der Inbetriebnahme der den Antrieb umfassenden Anlage vorgegeben und stellen daher für den Regler konstante Parameter dar. Somit ist die Funktion als Kennlinie darstellbar und der Rechenaufwand für den Regler ist gering.

Bei einer vorteilhaften Ausgestaltung ist der obere und untere kritische Wert jeweils aus Parametern des Reglers und einem vorgebbaren Wert eindeutig bestimmbar. Von Vorteil ist dabei, dass der kritische Wert insbesondere also nicht von Zustandsgrößen abhängt und daher vor Start der Regelung bestimmbar ist.

Wichtige Merkmale bei dem Antrieb zum Bewegen eines Objektes sind, dass der Antrieb einen Positionsregler umfasst,

wobei

der Positionsregler Mittel zum Umschalten zwischen einem linearen Regler und einem nichtlinearen Regler umfasst,

wobei die Mittel zum Umschalten mit Vergleichern steuerbar sind,

wobei die Eingänge der Vergleicher mit dem Ausgang eines Proportionalgliedes verbunden sind, deren Eingang direkt mit den Eingängen des linearen Reglers und des nichtlinearen Reglers verbunden ist.

Von Vorteil ist dabei, dass der rein lineare Regler mittels eines nichtlinearen Reglers dann modifiziert wird, wenn die Stellgrenze der Stellgröße oder die Begrenzung einer anderen Größe, wie beispielsweise die Begrenzung der durch zeitliche Ableitung der Stellgröße erzeugten Größe. Insbesondere ist somit das maximal zulässige Drehmoment eines einen Elektromotor umfassenden Antriebs berücksichtigbar, wodurch Überschwingen um die Zielposition herum reduzierbar ist. Die Erfindung bezieht sich aber auch auf lineare Antriebe, wobei dann die maximal zulässige Kraft eines einen Elektromotor umfassenden Antriebs berücksichtigbar ist.

Weitere Vorteile ergeben sich aus den Unteransprüchen.

**Bezugszeichenliste**

1 erster Bereich der nichtlinearen Funktion
2 zweiter Bereich der nichtlinearen Funktion
3 lineare Funktion
20 Proportionalglied
21 nichtlineares Glied
22 nichtlineares Glied
23 Umschaltemittel
24 Umschaltemittel
25 Vergleicher
26 Vergleicher
27 Proportionalglied

Die Erfindung wird nun anhand von Abbildungen näher erläutert:

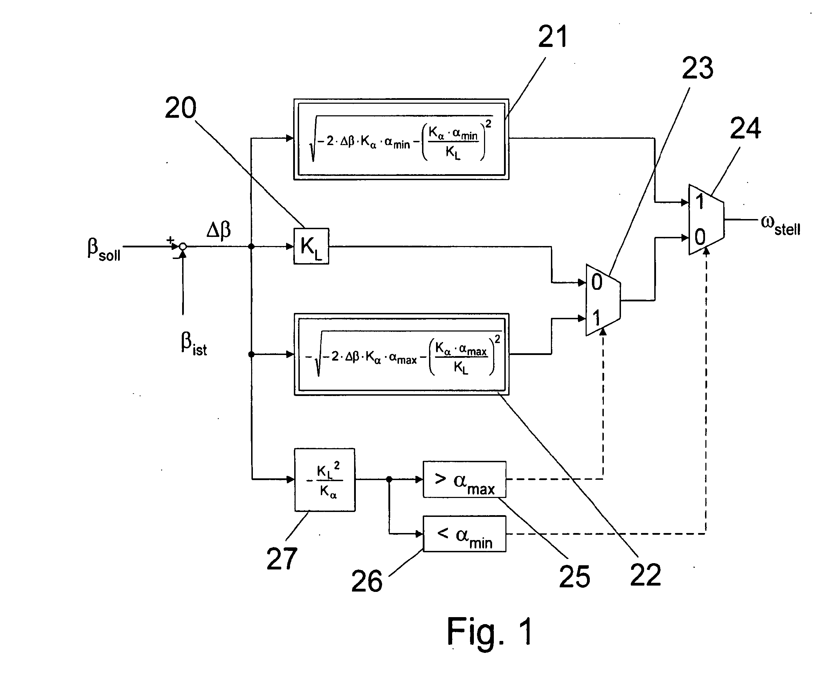

In der Figur 1 ist ein erfindungsgemäßer Regler gezeigt.

Dabei wird der Sollwert $\beta_{Soll}$ mit dem bestimmten Istwert $\beta_{Ist}$ verglichen und die Regelabweichung $\Delta\beta$ bestimmt. Diese wird dem Proportionalglied 20 zugeführt und somit mit der Proportionalitätskonstanten $K_L$ multipliziert und dem Umschalter 23 zugeführt, dessen Ausgangswert dem Umschalter 24 zugeführt wird.

Parallel zum Proportionalglied sind nichtlineare Glieder 21 und 22 angeordnet, deren Ausgangswerte den Umschaltern 23 und 24 zugeführt werden.

Die beiden nichtlinearen Glieder erzeugen jeweils eine Ausgangsgröße, die sich von der Ausgangsgröße des jeweiligen anderen nichtlinearen Gliedes im Vorzeichen unterscheiden und wobei jeweilige kritische Beschleunigungswerte $\alpha_{max}$ beziehungsweise $\alpha_{min}$ berücksichtigt werden.

Die Umschalter werden von Vergleichern (25,26) gesteuert, die ihren Eingangswert mit einem kritischen Beschleunigungswert $\alpha_{max}$ beziehungsweise $\alpha_{min}$ vergleichen. Diese beiden Werte sind vom Anwender vorgebbar. Vorteiligerweise ist $\alpha_{max} > 0$ und $\alpha_{min} < 0$.

Die Eingangswerte der Vergleicher werden aus der Regelabweichung $\Delta\beta$ bestimmt durch Multiplikation mit einer Konstanten. Hierzu ist das Proportionalitätsglied 27 vorgesehen.

Vorteiligerweise ist diese Konstante als

$$-\frac{K_L^2}{K_\alpha}$$ 

gewählt, wobei $K_\alpha$ ein vorgebbarer Anteilsfaktor

ist, mit dessen Wert der Anteil der maximal genutzten

Beschleunigung $\alpha_{Nutz}$ an der minimal erreichbaren Beschleunigung $\alpha_{min}$ ist, also gilt $\alpha_{Nutz} = K_\alpha \cdot \alpha_{min}$.

Der Ausgangswert des nichtlinearen Gliedes 21 wird bestimmt gemäß

$$\omega = \sqrt{-2 \cdot \Delta\beta \cdot K_\alpha \cdot \alpha_{min} - \left(\frac{K_\alpha \cdot \alpha_{min}}{K_L}\right)^2}.$$

Der Ausgangswert des nichtlinearen Gliedes 22 wird bestimmt gemäß

$$\omega = -\sqrt{-2 \cdot \Delta\beta \cdot K_\alpha \cdot \alpha_{max} - \left(\frac{K_\alpha \cdot \alpha_{max}}{K_L}\right)^2}.$$

Zusammenfassend gilt somit für die Berechnung des Lagereglerstellwertes: Wenn die Bedingung

$$-\frac{K_L^2}{K_\alpha} \cdot \Delta\beta > \alpha_{max}$$ 

erfüllt ist, beträgt der Stellwert

$$\omega = -\sqrt{-2 \cdot \Delta\beta \cdot K_\alpha \cdot \alpha_{max} - \left(\frac{K_\alpha \cdot \alpha_{max}}{K_L}\right)^2},$$ 

Wenn

die Bedingung $\alpha_{min} < -\frac{K_L^2}{K_\alpha} \cdot \Delta\beta < \alpha_{max}$ erfüllt ist,

beträgt der Stellwert $\omega = K_L \cdot \Delta\beta$.

Wenn die Bedingung $-\frac{K_L^2}{K_\alpha} \cdot \Delta\beta < \alpha_{min}$ erfüllt

ist, beträgt der Stellwert

$$\omega = \sqrt{-2 \cdot \Delta\beta \cdot \alpha_{min} - \left(\frac{\alpha_{min}}{K_L}\right)^2}.$$

In Figur 2 sind die lineare Funktion 3, welche zur Proportionalitätskonstanten $K_L$ zugehört, dargestellt. Außerdem ist die genannte nichtlineare Wurzelfunktion dargestellt, die die Bereiche 1 und 2 umfasst.

Bei dem erfindungsgemäßen Regler wird also die Kennlinie aus den Bereichen 2 und dem Bereich zwischen den Berührpunkten der nichtlinearen Kennlinie mit der linearen Kennlinie zusammengesetzt. Bei kleinen Regelabweichungen arbeitet der Regler also einem P-Regler entsprechend. Bei großen Abweichungen weist der Regler ein nichtlineares Verhalten auf.

Der Regler ist ein skalarer Regler.

Der erfindungsgemäße Regler nach Figur 1 wird bei der praktischen Ausführung einem unterlagerten Drehzahlregelkreis überlagert. Hierbei erzeugt der erfindungsgemäße Regler nach Figur 1 den Drehzahlsollwert für einen unterlagerten Drehzahlregeikreis, der beispielhaft als PI-Regler ausgeführt ist.

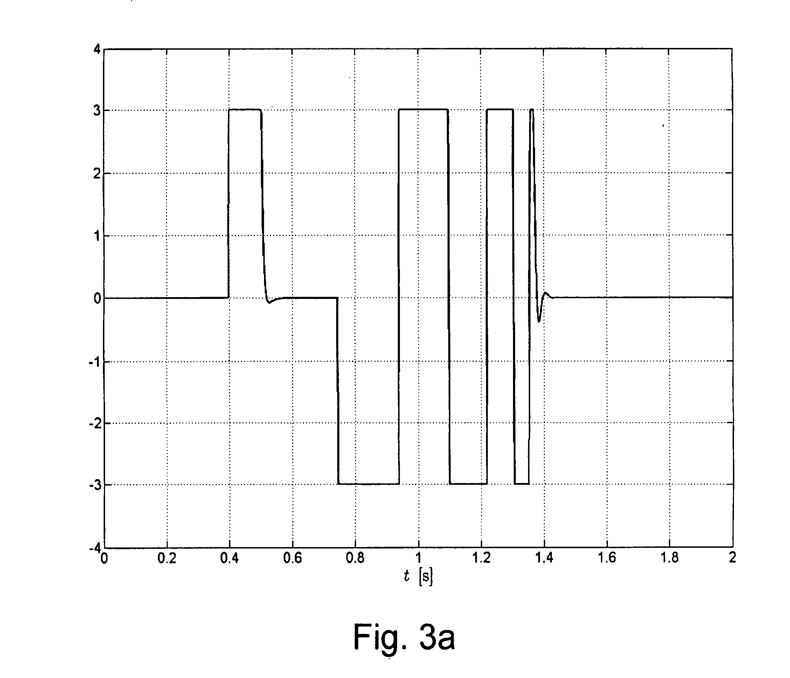

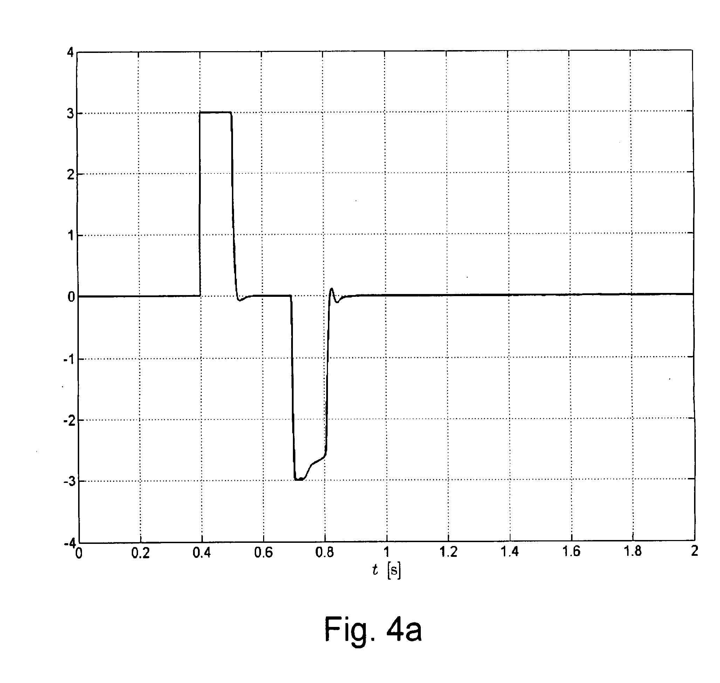

Um den Vorteil der Erfindung zu verdeutlichen ist daher in den Figuren 3a bis 3c verdeutlicht, wie ein solcher Regelkreis arbeitet, wenn statt des erfindungsgemäßen Reglers nach Figur 1 nur ein Proportionalanteil wirksam ist, also $\omega_{Soll} = K_L \cdot \Delta\beta$ gilt. In den Figuren 4a bis 4c ist bei ansonsten gleichen Bedingungen der erfindungsgemäße Regler nach Figur 1 voll wirksam.

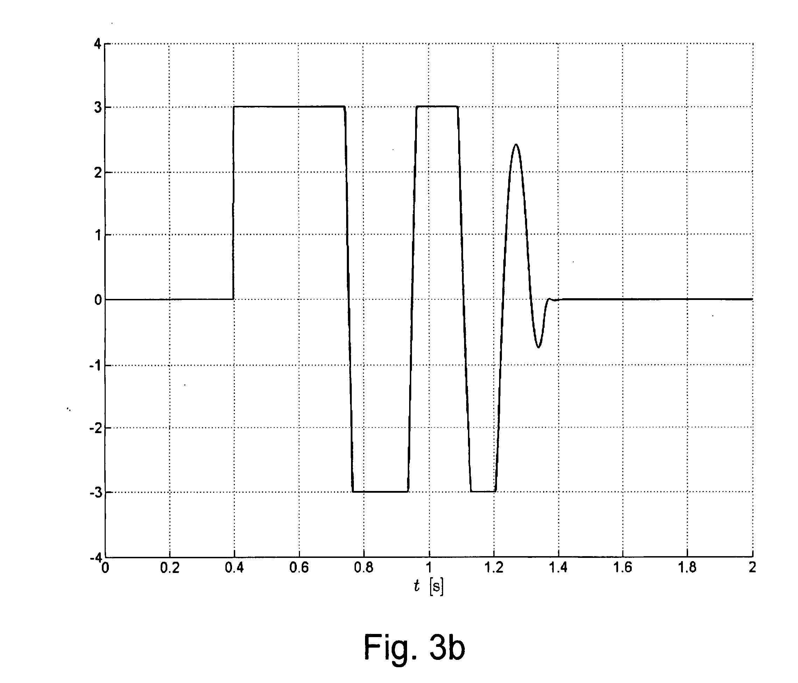

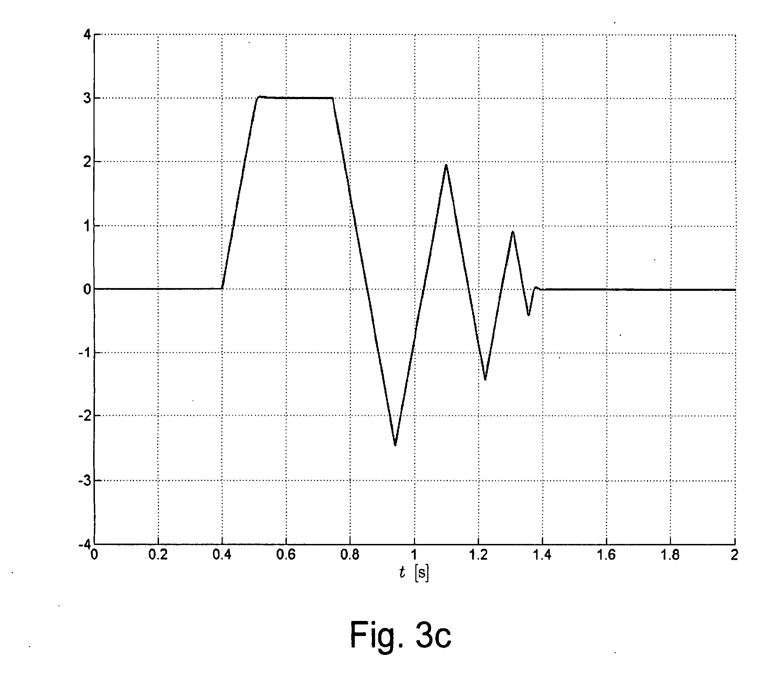

In Figur 3a ist ein beispielhafter zeitlicher Verlauf des Drehmomentsollwerts gezeigt, in Figur 3b ist der Drehzahlsollwertverlauf und in Figur 3c der zugehörige zeitliche Drehzahlistwert-Verlauf gezeigt. Dabei ist ein mehrfaches Hin- und Herschwingen offensichtlich.

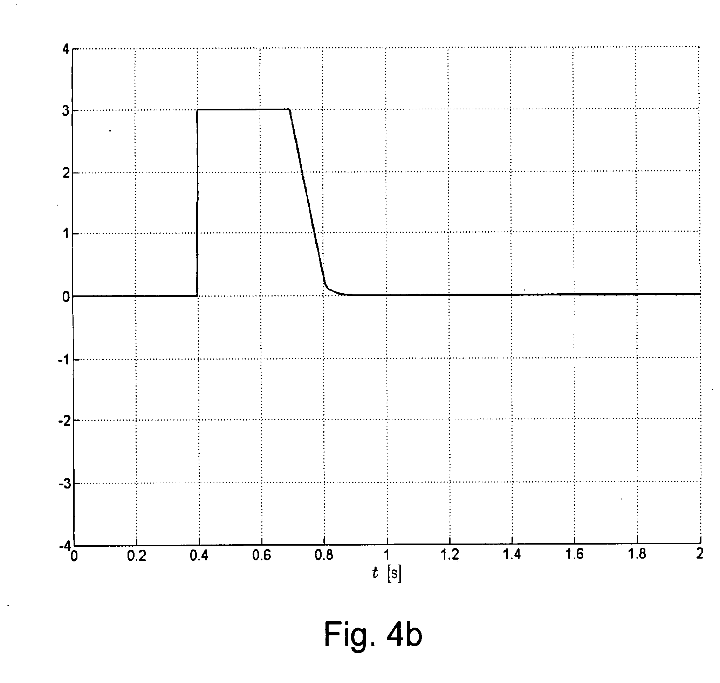

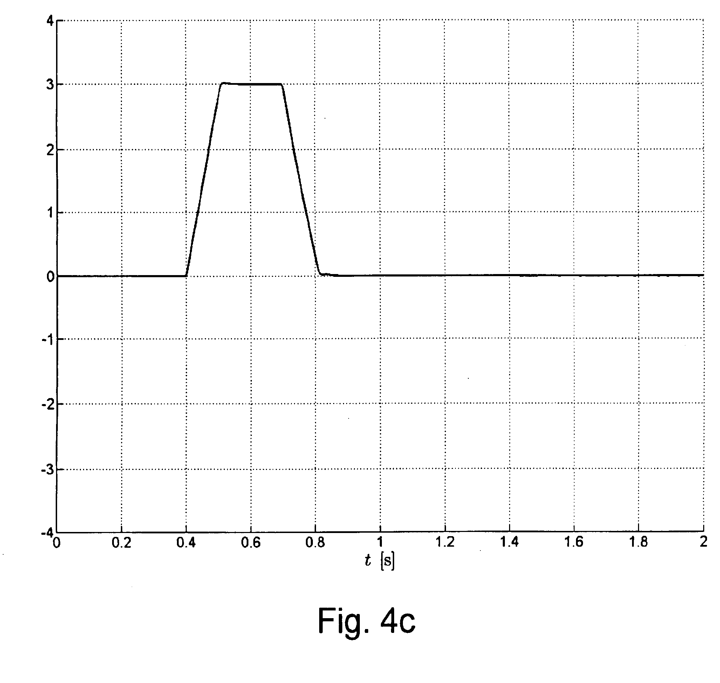

In Figur 4a ist ein beispielhafter zeitlicher Verlauf des Drehmomentsollwerts bei Verwendung des erfindungsgemäßen Reglers gezeigt, in Figur 4b ist der Drehzahlsollwertverlauf und in Figur 4c der zugehörige zeitliche Drehzahlistwert-Verlauf gezeigt. Dabei ist nur ein einmaliges Überschwingen beim Istwert und kein Überschwingen beim Sollwert offensichtlich. Das genannte Überschwingen findet seine Ursache in dem Integral-Anteil des unterlagerten Drehzahlregelkreises.

Bei weiteren erfindungsgemäßen Ausführungsbeispielen ist der erfindungsgemäße Regler nach Figur 1 auch als Vektorregler ausführbar.

Bei weiteren Ausführungsvarianten wird statt des unterlagerten mit PI-Regler ausgeführten Drehzahlregelkreises ein Drehzahlregelkreis mit unterlagertem PID-Regler oder einem anderen herkömmlichen Regler verwendet.

**Patentansprüche**

1. Verfahren zum Regeln einer Position, insbesondere eines durch einen Antrieb bewegbaren Objektes, wobei eine Regelabweichung $\Delta\beta$ zwischen Sollposition $\beta_{soll}$ und Istposition $\beta_{ist}$ bestimmt wird,
   **dadurch gekennzeichnet, dass**

   - der Stellwert aus der Regelabweichung durch lineare Operationen (20) bestimmt wird, solange die Regelabweichung unterhalb eines oberen kritischen Wertes und oberhalb eines unteren kritischen Wertes liegt, und
   - der Stellwert aus der Regelabweichung gemäß einer nichtlinearen Funktion (21, 22) bestimmt wird, solange die Regelabweichung oberhalb des oberen kritischen Wertes oder unterhalb des unteren kritischen Wertes liegt,

   wobei der obere kritische Wert derart bestimmt ist, dass beim Regeln ein vorgebbarer maximal zulässiger Beschleunigungswer $\alpha_{max}$ nicht überschritten wird und
   der untere kritische Wert derart bestimmt ist, dass beim Regeln ein vorgebbarer minimal zulässiger Beschleunigungswert $\alpha_{min}$ nicht unterschritten wird.

2. Verfahren nach Anspruch 1,
   **dadurch gekennzeichnet, dass**
   die nichtlineare Funktion jeder Regelabweichung umkehrbar eineindeutig einen Wert für die Stellgröße zuordnet.

3. Verfahren nach mindestens einem der vorangegangenen Ansprüche,
   **dadurch gekennzeichnet, dass**
   die linearen Operationen Multiplizieren der Regelabweichung mit einem Proportionalitätswert, Differenzieren des zeitlichen Verlaufs der Regelabweichung und/oder Integrieren des zeitlichen Verlaufs der Regelabweichung umfassen.

4. Verfahren nach mindestens einem der vorangegangenen Ansprüche,
   **dadurch gekennzeichnet, dass**

   - der Stellwert aus der Regelabweichung proportional, insbesondere durch Multiplikation mit einem Proportionalitätswert, bestimmt wird, solange die Regelabweichung unterhalb des oberen kritischen Wertes und oberhalb des unteren kritischen Wertes liegt.

5. Verfahren nach mindestens einem der vorangegangenen Ansprüche,
**dadurch gekennzeichnet, dass**

- die zu einem linearen Regler, insbesondere ohne Begrenzung, zugehörige, aus einer Regelabweichung resultierende Einschwingfunktion bestimmt wird,
- die zu dieser Regelabweichung zugehörige anfängliche Beschleunigung bestimmt wird,
- daraus ein zur zulässigen maximalen Beschleunigung zugehöriger Wert an Regelabweichung bestimmt wird,
- dieser Wert als oberer kritischer Wert verwendet wird.

6. Verfahren nach mindestens einem der vorangegangenen Ansprüche,
**dadurch gekennzeichnet, dass**

- die zu einem linearen Regler ohne Begrenzung zugehörige, aus einer Regelabweichung resultierende Einschwingfunktion bestimmt wird,
- die zur Regelabweichung zugehörige anfängliche Beschleunigung bestimmt wird,
- daraus ein zur zulässigen minimalen Beschleunigung zugehöriger Wert an Regelabweichung bestimmt wird,
- dieser Wert als unterer kritischer Wert verwendet wird.

7. Verfahren nach mindestens einem der vorangegangenen Ansprüche,
**dadurch gekennzeichnet, dass**
der lineare Regler **gekennzeichnet ist durch** den Proportionalitätswert.

8. Verfahren nach mindestens einem der vorangegangenen Ansprüche,
**dadurch gekennzeichnet, dass**
die Position ein Winkel, eine Bahnlänge oder eine Weglänge ist,
und/oder dass
die Stellgröße eine Geschwindigkeit, Bahngeschwindigkeit oder Winkelgeschwindigkeit ist.

9. Verfahren nach mindestens einem der vorangegangenen Ansprüche,
**dadurch gekennzeichnet, dass**
die Einschwingfunktion zur allgemeinen Lösung der dem Regler zugeordneten Differentialgleichung oder Integro-Differentialgleichung gehört.

10. Verfahren nach mindestens einem der vorangegangenen Ansprüche,
**dadurch gekennzeichnet, dass**
die nichtlineare Funktion eine Wurzelfunktion ist, insbesondere wobei der Radikant eine lineare Funktion der Regelabweichung ist.

11. Verfahren nach mindestens einem der vorangegangenen Ansprüche,
**dadurch gekennzeichnet, dass**
der obere und der untere kritische Wert umgekehrt proportional zum Quadrat des Proportionalitätswertes, insbesondere des linearen Reglers, ist.

12. Verfahren nach mindestens einem der vorangegangenen Ansprüche,
**dadurch gekennzeichnet, dass**
der obere kritische Wert proportional zum maximal zulässigen Beschleunigungswert ist und der untere kritische Wert proportional zum minimal zulässigen Beschleunigungswert ist.

13. Verfahren nach mindestens einem der vorangegangenen Ansprüche,
**dadurch gekennzeichnet, dass**
der obere und untere kritische Wert jeweils aus Parametern des Reglers und einem vorgebbaren Wert eindeutig bestimmbar ist, insbesondere also nicht von Zustandsgrößen abhängt.

14. Verfahren nach mindestens einem der vorangegangenen Ansprüche,
**dadurch gekennzeichnet, dass**
als Beschleunlgung eine Winkelbeschleunigung verwendet Ist.

15. Antrieb zum Bewegen eines Objektes, wobei der Antrieb geeignet ausgeführt ist zur Durchführung eines Verfahrens nach mindestens einem der vorangegangenen Ansprüche,
wobei der Antrieb einen Positionsregler umfasst,
**dadurch gekennzeichnet, dass**
der Positionsregler Mittel (23, 24) zum Umschalten zwischen einem linearen Regler (20) und einem nichtlinearen Regler (21, 22) umfasst,
wobei die Mittel (23, 24) zum Umschalten mit Vergleichern (25, 26) steuerbar sind, die zum Vergleichen mit einem vorgebbaren maximal zulässigen Beschleunigungswert beziehungsweise mit einem vorgebbaren minimal zulässigen Beschleunigungswert vorgesehen sind,
wobei die Eingänge der Vergleicher (25, 26) mit dem Ausgang eines Proportionalgliedes (27) verbunden sind, dessen Eingang direkt mit den Eingängen des linearen Reglers und des nichtlinearen Reglers (21, 22) verbunden ist.

**Claims**

1. A method of controlling a position, in particular of an object movable by a drive, wherein a control deviation $\Delta\beta$ between the desired position $\beta_{soil}$ and the actual position $\beta_{ist}$ is determined, **characterised in that**

- the control value is determined from the control deviation through linear operations (20) so long as the control deviation lies below an upper critical value and above a lower critical value, and
- the control value is determined from the control deviation according to a non-linear function (21, 22) so long as the control deviation lies above the upper critical value or below the lower critical value,

wherein the upper critical value is determined in such a manner that a predeterminable maximum permissible acceleration value $\alpha_{max}$ is not exceeded upon controlling and the lower critical value is determined in such a manner that a predeterminable minimum permissible acceleration value $\alpha_{min}$ is not fallen below upon controlling.

2. A method according to claim 1, **characterised in that** the non-linear function reversibly and clearly associates a value for the control variable to each control deviation.

3. A method according to at least one of the preceding claims, **characterised in that** the linear operations comprise multiplication of the control deviation by a proportionality value, differentiation of the temporal course of the control deviation and/or integration of the temporal course of the control deviation.

4. A method according to at least one of the preceding claims, **characterised in that**

- the control value is determined proportionally from the control deviation, in particular by multiplication by a proportionality value, so long as the control deviation lies below the upper critical value and above the lower critical value.

5. A method according to at least one of the preceding claims, **characterised in that**

- the transient function belonging to a linear controller, in particular without limitation, and resulting from a control deviation is determined,
- the initial acceleration belonging to this control deviation is determined,
- a control-deviation value belonging to the permissible maximum acceleration is determined therefrom,
- this value is used as an upper critical value.

6. A method according to at least one of the preceding claims, **characterised in that**

- the transient function belonging to a linear controller without limitation and resulting from a control deviation is determined,

- the initial acceleration belonging to the control deviation is determined,
- a control-deviation value belonging to the permissible minimum acceleration is determined therefrom,
- this value is used as a lower critical value.

7. A method according to at least one of the preceding claims, **characterised in that** the linear controller is **characterised by** the proportionality value.

8. A method according to at least one of the preceding claims, **characterised in that** the position is an angle, a path length or a travel length, and/or **in that** the control variable is a speed, a path speed or an angular speed.

9. A method according to at least one of the preceding claims, **characterised in that** the transient function belongs to the general solution of the differential equation or integro-differential equation associated with the controller.

10. A method according to at least one of the preceding claims, **characterised in that** the non-linear function is a root function, in particular wherein the radicand is a linear function of the control deviation.

11. A method according to at least one of the preceding claims, **characterised in that** the upper and the lower critical value is inversely proportional to the square of the proportionality value, in particular of the linear controller.

12. A method according to at least one of the preceding claims, **characterised in that** the upper critical value is proportional to the maximum permissible acceleration value and the lower critical value is proportional to the minimum permissible acceleration value.

13. A method according to at least one of the preceding claims, **characterised in that** the upper and lower critical value can In each case be clearly determined from parameters of the controller and from a predeterminable value, in particular therefore is not dependent on state variables.

14. A method according to at least one of the preceding claims, **characterised in that** an angular acceleration is used as acceleration.

15. A drive for moving an object, wherein the drive is suitable for carrying out a method according to at least one of the preceding claims, wherein the drive comprises a position controller, **characterised in that** the position controller comprises means (23, 24) for switching between a linear controller (20) and a non-linear controller (21, 22), wherein the means (23, 24) for switching are controllable by comparators (25, 26) provided for comparison with a predeterminable maximum permissible acceleration value or with a predeterminable minimum permissible acceleration value as the case may be, wherein the Inlets of the comparators (25, 26) are connected to the outlet of a proportional member (27) whose inlet is directly connected to the inlets of the linear controller and the non-linear controller (21, 22).

**Revendications**

1. Procédé de régulation d'une position, en particulier d'un objet pouvant être mis en mouvement par l'intermédiaire d'un entraînement, un écart de régulation $\Delta\beta$ étant déterminé entre une position de consigne $\beta_{soll}$ et une position réelle $\beta_{ist}$, **caractérisé par le fait que**

   - la valeur de réglage est déterminée sur la base de l'écart de régulation, par des opérations linéaires (20), aussi longtemps que ledit écart de régulation se situe en deçà d'une valeur critique supérieure et au-delà d'une valeur critique inférieure, et
   - ladite valeur de réglage est déterminée sur la base dudit écart de régulation, en conformité avec une fonction non linéaire (21, 22), aussi longtemps que ledit écart de régulation se situe au-delà de ladite valeur critique supérieure et en deçà de ladite valeur critique inférieure,

   sachant que ladite valeur critique supérieure est déterminée de façon telle qu'une valeur d'accélération maximale admissible $\alpha_{max}$, pouvant être préétablie, ne soit pas excédée au cours de la régulation, et que ladite valeur critique inférieure est déterminée de façon telle qu'une valeur d'accélération minimale admissible $\alpha_{min}$, pouvant être préétablie, ne soit pas dépassée négativement au cours de ladite régulation.

2. Procédé selon la revendication 1, **caractérisé par le fait que** la fonction non linéaire assigne à chaque écart de régulation, de manière bijective et réversible, une valeur relative à la grandeur de réglage.

3. Procédé selon au moins l'une des revendications précédentes, **caractérisé par le fait que** les opérations linéaires englobent une multiplication de l'écart de régulation par une valeur de proportionnalité, une différentiation de l'allure temporelle dudit écart de régulation et/ou une intégration de ladite allure temporelle dudit écart de régulation.

4. Procédé selon au moins l'une des revendications précédentes, **caractérisé par le fait que**

   - la valeur de réglage est déterminée en mode proportionnel sur la base de l'écart de régulation, notamment par multiplication par une valeur de proportionnalité, aussi longtemps que ledit écart de régulation se situe en deçà de la valeur critique supérieure et au-delà de la valeur critique inférieure,

5. Procédé selon au moins l'une des revendications précédentes, **caractérisé par**

   - une détermination de la fonction de régime transitoire résultant d'un écart de régulation et associée à un régulateur linéaire, en particulier sans limitation,
   - une détermination de l'accélération initiale associée à cet écart de régulation,
   - la détermination, sur cette base, d'une valeur d'écart de régulation associée à l'accélération maximale admissible,
   - l'utilisation de cette valeur en tant que valeur critique supérieure.

6. Procédé selon au moins l'une des revendications précédentes, **caractérisé par**

   - une détermination de la fonction de régime transitoire résultant d'un écart de régulation et associée à un régulateur linéaire, sans aucune limitation,
   - une détermination de l'accélération initiale associée audit écart de régulation,
   - la détermination, sur cette base, d'une valeur d'écart de régulation associée à l'accélération minimale admissible,
   - l'utilisation de cette valeur en tant que valeur critique inférieure.

7. Procédé selon au moins l'une des revendications précédentes, **caractérisé par le fait que** le régulateur linéaire est **caractérisé par** la valeur de proportionnalité.

8. Procédé selon au moins l'une des revendications précédentes, **caractérisé par le fait que** la position est un angle, une longueur de trajectoire ou une longueur de course, et/ou **par le fait que** la grandeur de réglage est une vitesse, une vitesse sur un parcours de trajectoire, ou une vitesse angulaire.

9. Procédé selon au moins l'une des revendications précédentes,
**caractérisé par le fait que**
la fonction de régime transitoire est associée à la résolution générale de l'équation différentielle ou de l'équation intégro-différentielle assignée au régulateur.

10. Procédé selon au moins l'une des revendications précédentes,
**caractérisé par le fait que**
la fonction non linéaire est une fonction racine carrée, le radicande étant notamment une fonction linéaire de l'écart de régulation.

11. Procédé selon au moins l'une des revendications précédentes,
**caractérisé par le fait que**
les valeurs critiques supérieure et inférieure sont inversement proportionnelles au carré de la valeur de proportionnalité, en particulier du régulateur linéaire.

12. Procédé selon au moins l'une des revendications précédentes,
**caractérisé par le fait que**
la valeur critique supérieure est proportionnelle à la valeur d'accélération maximale admissible, et la valeur critique inférieure est proportionnelle à la valeur d'accélération minimale admissible.

13. Procédé selon au moins l'une des revendications précédentes,
**caractérisé par le fait que**
les valeurs critiques supérieure et inférieure peuvent être respectivement déterminées, de manière univoque, sur la base de paramètres du régulateur et d'une valeur pouvant être préétablie, en n'étant par conséquent pas tributaires, en particulier, de grandeurs d'état.

14. Procédé selon au moins l'une des revendications précédentes,
**caractérisé par le fait**
**qu'**une accélération angulaire est utilisée en tant qu'accélération.

15. Entraînement dévolu à la mise en mouvement d'un objet, ledit entraînement étant adéquatement réalisé en vue de la mise en oeuvre d'un procédé selon au moins l'une des revendications précédentes, ledit entraînement englobant un régulateur de positions,
**caractérisé par le fait que**
le régulateur de positions comprend des moyens (23, 24) de commutation entre un régulateur linéaire (20) et un régulateur non linéaire (21, 22),

lesdits moyens (23, 24) pouvant être commandés, en vue de la commutation, par des comparateurs (25, 26) prévus pour effectuer, respectivement, la comparaison avec une valeur d'accélération maximale admissible pouvant être préétablie, et avec une valeur d'accélération minimale admissible pouvant être préétablie,

les entrées desdits comparateurs (25, 26) étant raccordées à la sortie d'un élément (27) à action proportionnelle, dont l'entrée est directement connectée aux entrées dudit régulateur linéaire et dudit régulateur non linéaire (21, 22),

Fig. 1

Fig. 2

Fig. 3a

Fig. 3b

Fig. 3c

Fig. 4a

EP 2 132 606 B1

Fig. 4b

Fig. 4c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0179356 A
- DE 1941312
- DE 19532477 A1

- DE 199752 C1
- JP 9238031 B
- US 6185467 B1

**In der Beschreibung aufgeführte Nicht-Patentliteratur**

- **J. O. Krah.** Bode Plot basierter Servoantrieb Tuning Wizard: Ein Ansatz zwischen manuellem Tuning und Auto-Tuning. *SPS / IPC / Drives, Nürnberg,* November 2004, 579-587

- **H. Schmirgel ; J. O. Krah ; R. Berger.** Delay Time Compensation in the Current Control Loop of Servo Drives - Higher Bandwidth at no Trade-off. *Power Conversion Intelligent Motion, Nürnberg,* Juni 2006